# EUROPEAN PATENT APPLICATION

(11) **EP 4 832 158 A1**
(43) Date of publication of application: **28.10.2026**
(21) Application number: 24907617.5
(22) Date of filing: 13.05.2024
(51) Int. Cl.: H01M 10/613, H01M 10/6551, H01M 10/6566, H01M 50/502, H01M 50/507

(54) **BATTERY MODULE INCLUDING COOLING PORT**

(30) Priority: 18.12.2023 KR 20230184039
(71) Applicant: SK On Co., Ltd., Seoul 03161 (KR)
(72) Inventor: KWAK, Seung-Il, Daejeon 34124 (KR); LEE, Jung-Kwan, Daejeon 34124 (KR); CHOI, Ha-Neul, Daejeon 34124 (KR)
(74) Representative: Stolmár & Partner Patentanwälte PartG mbB
(86) International application number: PCT/KR2024/006494
(87) International publication number: WO 2025/135323

(57) **Abstract**

According to an embodiment of the present disclosure, provided is a battery module comprising: a housing provided with an accommodation space; a cell assembly which is accommodated in the accommodation space and comprises a plurality of battery cells; a first cooling port which is arranged in the housing such that at least part thereof faces one side of the cell assembly, and through which a cooling fluid is supplied into the accommodation space; and a second cooling port which is arranged in the housing such that at least part thereof faces the other side of the cell assembly, and through which the cooling fluid supplied to the accommodation space is discharged to the outside of the housing, wherein the first cooling port and the second cooling port are arranged at different heights from each other.

## Description

### Technical Field

The present disclosure relates to a battery module including a cooling port.

### Background Art

Secondary batteries, unlike primary batteries, offer the convenience of charging and recharging electricity, and are attracting significant attention as a power source for various mobile devices, electric vehicles, or the like.

Such secondary batteries may include a battery cell in which an electrode assembly formed by stacking a positive electrode plate, a negative electrode plate, and a separator or by winding them in a roll form, is accommodated in a case. The battery cell may be provided in plural and stacked in a predetermined direction, and accommodated in a battery module or a battery pack.

Meanwhile, the battery cell may generate heat due to electrochemical reactions during charging and discharging. When this heat is not dissipated, it will continue to accumulate in an internal space of the battery module or the battery pack, potentially leading to a decrease in performance or even a risk for occurrence of fire.

Therefore, research into structures that may more effectively cool battery cells are required.

### Disclosure of Invention

### Technical Problem

A battery module including a cooling port of the present disclosure may more effectively cool a battery cell.

A battery module including a cooling port of the present disclosure may be configured to change a flow direction of a cooling fluid flowing therein, to uniformly cool a plurality of battery cells.

A battery module including a cooling port of the present disclosure may more effectively cool a plurality of battery cells through a plurality of flow paths through which a cooling fluid flows.

A battery module including a cooling port of the present disclosure may be widely applied to electric vehicles, battery charging stations, and other green technology fields such as solar power generation devices, wind power generation devices, or the like utilizing batteries. Furthermore, a battery module including a cooling port of the present disclosure may be used in eco-friendly electric vehicles, hybrid vehicles, and the like, which aim to prevent climate change by suppressing air pollution and greenhouse gas emissions.

### Solution to Problem

A battery module according to an embodiment of the present disclosure includes a housing provided with an accommodation space; a cell assembly accommodated in the accommodation space and including a plurality of battery cells; a first cooling port of which at least a portion is disposed in the housing to face one side of the cell assembly, and supplying cooling fluid to the accommodation space; and a second cooling port of which at least a portion is disposed in the housing to face the other side of the cell assembly, and exhausting cooling fluid supplied to the accommodation space to an external space of the housing, wherein the first cooling port and the second cooling port are disposed to have different heights.

According to an embodiment, the second cooling port may be disposed at a higher position than the first cooling port.

According to an embodiment, the first cooling port may include a discharge end through which the cooling fluid is discharged, and the second cooling port may include an exhaust end through which the cooling fluid from the accommodation space is introduced, and wherein the exhaust end may be disposed at a higher position than the discharge end.

According to an embodiment, the plurality of battery cells may be stacked in the accommodation space in a first direction, and the first cooling port and the second cooling port may be disposed to face each other in a second direction, perpendicular to the first direction.

According to an embodiment, the first cooling port and the second cooling port may be provided as a plurality of first cooling ports and a plurality of second cooling ports, respectively, and each of the plurality of first cooling ports and each of the plurality of second cooling ports may be provided in opposing pairs facing each other in the second direction.

According to an embodiment, a guide portion provided in the housing to guide the cooling fluid supplied from the first cooling port in the second direction may be further included.

According to an embodiment, the guide portion may be disposed at a lower position than the first cooling port, and at least a portion of the guide portion may be disposed to face the first cooling port.

According to an embodiment, a first busbar assembly and a second busbar assembly, respectively disposed on one side and the other side of the cell assembly in the accommodation space, and each of the first busbar assembly and the second busbar assembly including a plurality of pass holes through which the cooling fluid passes, according to claim 1, may be further included, and the accommodation space may include a first space between the housing and the first busbar assembly; a second space in which the cell assembly is disposed, and between the first busbar assembly and the second busbar assembly; and a third space between the second busbar assembly and the housing.

According to an embodiment, the housing may include a first cover disposed above the cell assembly, and a second cover disposed below the cell assembly and facing the first cover with the cell assembly interposed therebetween, and the second space may include a first flow path formed as a separation space between the cell assembly and the first cover, and a second flow path formed as a separation space between the cell assembly and the second cover.

According to an embodiment, the cell assembly may include a plurality of cooling fins disposed between the plurality of battery cells, and the plurality of cooling fins may include a body portion facing the plurality of battery cells; a first extension portion extending from the body portion to one side and disposed in the first flow path; and a second extension portion extending from the body portion to the other side and disposed in the second flow path.

According to an embodiment, the cell assembly may include a plurality of cooling fins disposed between the plurality of battery cells, and the plurality of cooling fins may extend to contact at least one of the first cover or the second cover, to divide at least one of the first flow path or the second flow path into a plurality of flow paths.

According to an embodiment, each of the first busbar assembly and the second busbar assembly may include a plurality of busbars electrically connected to the plurality of battery cells, and the plurality of pass holes may be disposed between the plurality of busbars in the first direction.

According to an embodiment, the first busbar assembly may be provided with a fluid guide guiding the flow of the cooling fluid supplied from the first cooling port, and the fluid guide may include a guide body having at least one guide hole formed in communication with the plurality of pass holes; and an extension portion extending from the guide body in the first direction.

According to an embodiment, the first busbar assembly may further include a plurality of pass hole guides disposed between the plurality of pass holes and protruding in a direction toward the first cooling port, and the plurality of pass hole guides may be provided with a shape such that a gap between adjacent pass holes, among the plurality of pass holes, gradually decreases in a direction from an upstream side to a downstream side, based on a flow direction of the cooling fluid.

According to an embodiment, a fluid distributer distributing flow of the cooling fluid may be disposed between the plurality of pass holes and the cell assembly, and the fluid distributer may be provided with a shape such that a width facing the cooling fluid increases in a direction from an upstream side to a downstream side, based on a flow direction of the cooling fluid in the accommodation space.

According to an embodiment, the first cooling port may include a first hose portion of which at least a portion is disposed in the accommodation space and through which fluid supplied to the accommodation space flows, the second cooling port may include a second hose portion of which at least a portion is disposed in the accommodation space and through which the cooling fluid exhausted to the external space of the housing flows, and at least one of the first hose portion or the second hose portion may be provided to be bendable in the accommodation space.

According to an embodiment, the first hose portion may be provided with a discharge end through which the cooling fluid is discharged on an end disposed in the accommodation space, and the second hose portion may be provided with an exhaust end through which the cooling fluid of the accommodation space is introduced on an end disposed in the accommodation space, and at least one of the first hose portion or the second hose portion is bendable in a predetermined direction such that a direction in which the discharge end or the exhaust end faces is changed.

Furthermore, a battery module according to an embodiment of the present disclosure includes a housing provided with an accommodation space; a cell assembly disposed in the accommodation space and including a plurality of battery cells; a first cooling port provided in the housing to supply a cooling fluid to the accommodation space; and a second cooling port provided in the housing to exhaust the cooling fluid from the accommodation space to an external space of the housing, wherein the housing includes a first port mounting portion and a second port mounting portion, on which the first cooling port and the second cooling port are respectively mounted, and wherein the first port mounting portion and the second port mounting portion are disposed at different heights.

Furthermore, a battery module according to an embodiment of the present disclosure includes a cell assembly including a plurality of battery cells; a housing provided with an accommodation space in which the cell assembly is disposed, and including a first cover and a second cover, coupled to face each other, with the cell assembly interposed therebetween; and a first cooling port in which a discharge end discharging cooling fluid is disposed in the accommodation space to discharge the cooling fluid into the accommodation space, wherein the accommodation space includes a first flow path and a second flow path, through which the cooling fluid flows between the cell assembly and the first cover, and wherein the first cooling port changes a facing direction of the discharge end, to change a flow rate of the cooling fluid flowing through the first flow path and the second flow path.

In an embodiment, in the discharge end, the facing direction of the discharge end may be changed to face at least one of the first flow path, the second flow path, or the cell assembly.

Although the solutions according to the present disclosure has been described, this is exemplary, and it should be understood that it belongs to the present disclosure even if other configurations not mentioned are added.

### Advantageous Effects of Invention

According to an embodiment of the present disclosure, a battery module including a cooling port capable of more effectively cooling a battery cell may be provided.

According to an embodiment of the present disclosure, a battery module including a cooling port capable of uniformly cooling a plurality of battery cells may be provided by being provided with a means for changing a flow direction of a cooling fluid flowing therein.

According to an embodiment of the present disclosure, a battery module including a cooling port capable of more effectively cooling a plurality of battery cells through a plurality of flow paths through which a cooling fluid flows, may be provided.

### Brief Description of Drawings

FIG. 1 is a perspective view of a battery module according to an embodiment of the present disclosure.
FIG. 2 is an exploded perspective view of a battery module according to an embodiment of the present disclosure.
FIG. 3 is an enlarged view of a portion of a cross-section taken along line I-I' of FIG. 1.
FIG. 4 is a schematic diagram illustrating a flow direction of the cooling fluid in FIG. 3.
FIG. 5 is a diagram illustrating a portion of a cross-section taken along line II-II' of FIG. 1.
FIG. 6 is an enlarged view of portion A of FIG. 5, and FIG. 7 is an enlarged view of portion B of FIG. 5.
FIG. 8a is an enlarged view of the inlet port portion of FIG. 1, and FIG. 8b is an enlarged view of the outlet port portion of FIG. 1.
FIG. 9 is an enlarged view of portion C of FIG. 2.
FIG. 10a is a perspective view of a cooling port according to an embodiment, and FIG. 10b is a cross-sectional view of the cooling port.
FIG. 11 is a diagram illustrating a first busbar assembly disposed to be close to an inlet port according to an embodiment.
FIG. 12 is a diagram illustrating a second busbar assembly disposed to be close to an outlet port according to an embodiment.
FIG. 13 is a cross-sectional view of a battery module according to another embodiment of the present disclosure.
FIG. 14 is a diagram schematically illustrating a flow direction of the cooling fluid in FIG. 13.
FIG. 15a is a diagram schematically illustrating a flow direction of the cooling fluid when the inlet port faces upward in FIG. 13, and FIG. 15b is a diagram schematically illustrating a flow direction of the cooling fluid when the inlet port faces downward in FIG. 13.
FIG. 16 is a diagram illustrating an example in which an inlet port is guided by a guide.
FIG. 17a is a perspective view of a cooling port according to another embodiment, and FIG. 17b is a cross-sectional view of the cooling port.
FIG. 18 is a cross-sectional view of a hose portion of a cooling port according to another embodiment.
FIGS. 19a and 19b are example drawings illustrating changes in angle of a hose according to another embodiment.
FIG. 20 is a cross-sectional view of a battery module provided with a fluid distributer according to another embodiment.
FIG. 21 is a partially enlarged view of the fluid distributer of FIG. 20.

### Best Mode for the Invention

Before a detailed description of the embodiments, it should be noted that the terms or words used in the following description and claims should not be construed as limited to their conventional or dictionary meanings. Rather, they should be construed as having meanings and concepts consistent with the technical spirit of the present disclosure, based on the principle that the inventor may appropriately define the concepts of terms to best describe his or her invention.

The same reference numbers or symbols used in each drawing represent parts or components that perform substantially the same functions. For convenience of explanation and understanding, the same reference numbers or symbols may be used in different embodiments.

In the following description, singular expressions include plural expressions unless the context clearly indicates otherwise. Terms such as "comprise," "include," "constitute," or the like may be intended to specify that features, numbers, steps, operations, elements, components, or combinations thereof described in the specification exist, and should be understood not to preclude the existence or addition of one or more other features, numbers, steps, operations, elements, components, or combinations thereof.

In addition, in the following description, expressions such as an upper side, an upper portion, on, a lower side, a lower portion, below, a side surface, a front surface, a rear surface, or the like may be expressed based on a direction illustrated in the drawings, and it may be revealed in advance that when a direction of an object is changed, it may be expressed differently.

In addition, terms including ordinal numbers such as "first," "second," or the like may be used in this specification and claim scope to distinguish between components. These ordinal numbers may be used to distinguish the same or similar components from each other, and the meaning of the term should not be limitedly interpreted due to the use of such ordinal numbers. For example, components combined with such ordinal numbers should not be interpreted in a limited order of use or arrangement by the numbers. As necessary, each ordinal may be used interchangeably.

Hereinafter, the present disclosure will be described in detail with reference to the accompanying drawings. However, this is illustrative only and the present disclosure may not be limited to the specific embodiments illustrated exemplarily.

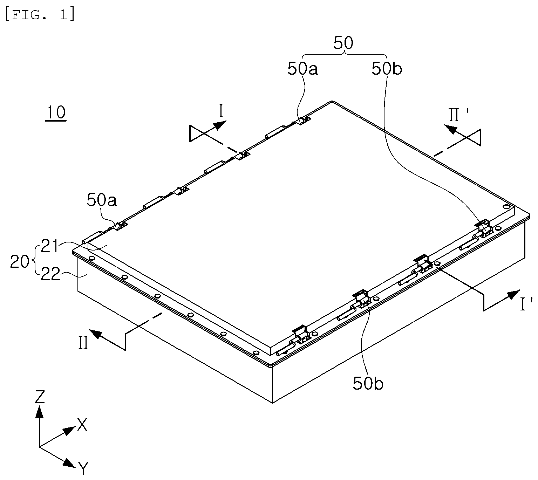

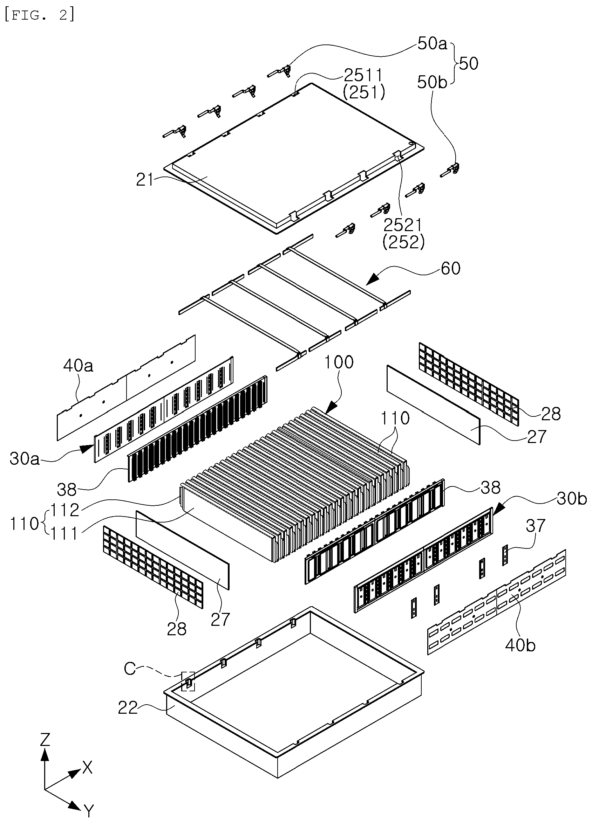

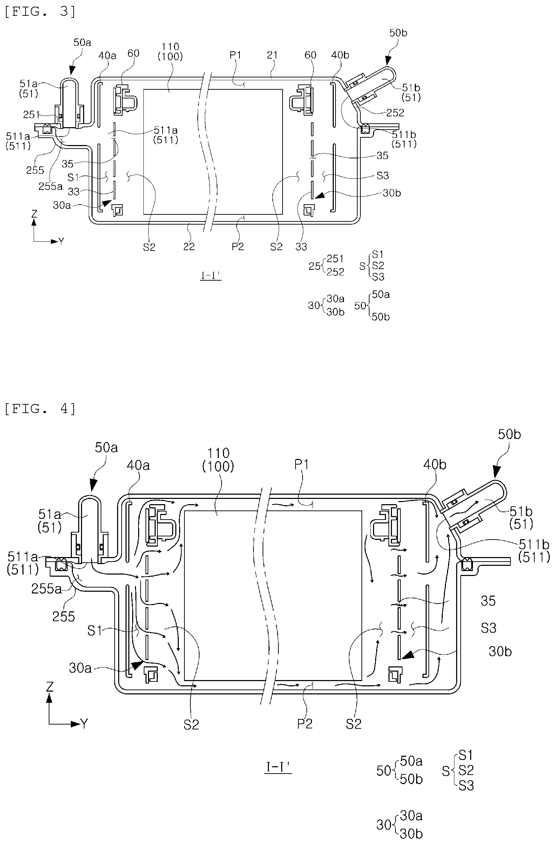

FIG. 1 is a perspective view of a battery module according to an embodiment of the present disclosure, FIG. 2 is an exploded perspective view of a battery module according to an embodiment of the present disclosure, FIG. 3 is a cross-sectional view illustrating one side and the other side taken along line I-I' of FIG. 1, and FIG. 4 is a schematic diagram illustrating a flow direction of the cooling fluid in FIG. 3.

Referring to FIGS. 1 to 4 together, a battery module (10) according to an embodiment of the present disclosure may include a housing (20) forming an accommodation space (S), a cell assembly (100) accommodated in the accommodation space (S) and including a plurality of battery cells (110), and a cooling port (50) mounted on the housing (20) to supply a cooling fluid to the accommodation space (S) or exhaust the supplied cooling fluid to an external space of the housing (20). In addition, the cooling port (50) may include an inlet port (50a, "first cooling port") supplying the cooling fluid to the accommodation space (S), and an outlet port (50b, "second cooling port") exhausting the cooling fluid supplied to the accommodation space (S) to the external space of the housing (20). In this case, the inlet port (50a) and the outlet port (50b) may be disposed at different heights.

Specifically, the outlet port (50b) may be disposed at a higher position than the inlet port (50a) in a direction (height direction or +Z-axis direction) in which the cooling fluid rises from the accommodation space (S). This allows a maximum amount of the cooling fluid to be accommodated in the accommodation space (S).

The phrase "the outlet port (50b) may be disposed at a higher position than the inlet port (50a)" herein refers to flow of the cooling fluid. This may mean that a portion of the outlet port (50b) into which the cooling fluid flows (511;b exhaust end) may be disposed higher than a portion of the inlet port (50a) through which the cooling fluid is discharged (511a; discharge end). In this case, "at a higher position" may refer to the +Z-axis direction in the drawings, or the direction in which the cooling fluid rises from the accommodation space (S).

In the cooling port (50), based on the flow of the cooling fluid, those disposed upstream through which the cooling fluid flows may be referred to as the inlet port (50a; first port), and those disposed downstream therethrough may be referred to as the outlet port (50b; second port). The inlet port (50a) and the outlet port (50b) may be used for convenience in distinguishing their positions, and their specific configurations may be identical.

The term "cooling fluid" in the present disclosure refers to a fluid that acts as an electrical insulator, such as an insulating oil primarily composed of a non-conductive oil. However, the cooling fluid in the present disclosure is not limited thereto, and any fluid capable of cooling the battery cell (110) through heat exchange with the battery cell (110) may be considered to belong to the cooling fluid.

The housing (20) may include a first cover (21) located above the cell assembly (100), and a second cover (22) supporting a lower portion of the cell assembly (100). The first cover (21) and the second cover (22) may be coupled to face each other in the height direction (Z-axis direction), with the cell assembly (100) interposed therebetween. The first cover (21) and the second cover (22) may be coupled to form the accommodation space (S) therein.

Furthermore, according to an embodiment, a side plate (27) and a side cover (28) may be disposed in a direction, perpendicular to a stacking direction of the cell assembly (100) (X-axis direction in the drawings). The side plate (27) and the side cover (28) may include an electrically insulating material, and may protect the cell assembly (100) from an external impact or the like.

In addition, the battery module (10) of the present disclosure may include a busbar assembly (30) disposed to face at least one side of the cell assembly (100) and electrically connecting the plurality of battery cells (110) to each other, and a circuit unit (60) connected to the plurality of battery cells (110) and capable of receiving temperature or current values. The circuit unit (60) may be connected to a battery management system (BMS).

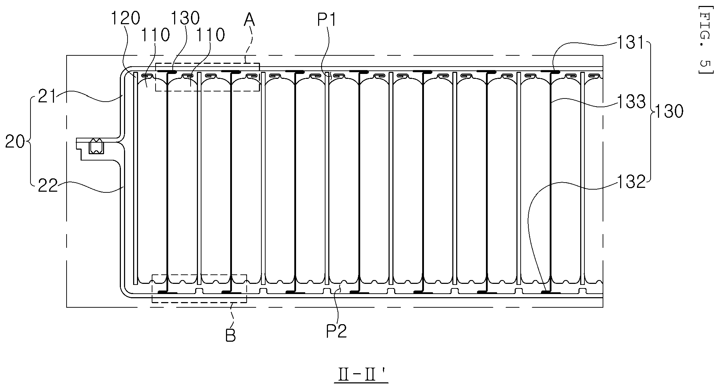

The cell assembly (100) may include a plurality of battery cells (110) stacked in a predetermined direction (for example, X-axis direction of the drawings), a plurality of cell pads (120) disposed between the plurality of battery cells (110), and a cooling fin (130) disposed between and cooling the plurality of battery cells (110) and the plurality of cell pads (120) (see FIG. 5).

Each of the plurality of battery cells (110) may include a case (111) accommodating an electrode assembly (not illustrated) formed by stacking a positive electrode plate and a negative electrode plate, and a lead tab (112) electrically connected to the electrode assembly and protruding from at least one side of the case (111).

The electrode assembly may be configured such that the positive and negative electrode plates may be stacked with wide surfaces thereof facing each other, with a separator interposed therebetween. The separator may be configured to prevent electrical short-circuiting between the positive and negative electrode plates and to facilitate flow of ions. For example, the separator may include a porous polymer film or a porous nonwoven fabric.

Furthermore, the electrode assembly may be accommodated in the case in various manners, such as a stacking type, a Z-folding type, or a stack-folding type, or the like, in a jelly roll type formed by winding in a predetermined direction.

The plurality of battery cells (110) may be pouch-type, prismatic-type, or cylindrical-type secondary batteries, depending on a structure of the case (111). In the drawings, the battery cells (110) are illustrated as pouch cells in which the case (111) is formed in a pouch shape, but the present disclosure is not limited thereto.

The busbar assembly (30) may include a plurality of busbars (31) electrically connecting the plurality of battery cells (110) to each other, and a support plate (33) on which the plurality of busbars (31) are mounted.

In the present disclosure, a lead tab (112) of the battery cells (110) may protrude toward both sides in a direction, perpendicular to a stacking direction (e.g., Y-axis direction in the drawings), and accordingly, the busbar assemblies (30) may also be disposed on both sides of the cell assembly (100). In this case, structures of a first busbar assembly (30a) disposed on one side of the cell assembly (100) and a second busbar assembly (30b) disposed on the other side may be identical, but may be different from each other only in view of a position.

The present disclosure is not limited to busbar assemblies (30) disposed on both sides, and any arrangement in which a busbar assembly (30) is disposed on at least one side may be considered in the scope of the present disclosure.

The cell pad (120) may be disposed between the plurality of battery cells (110) to join adjacent battery cells (110) or absorb vibrations or shocks. For example, the cell pad (120) may include a material with low thermal conductivity to prevent heat transmission between adjacent battery cells (110). This prevents heat from spreading to adjacent battery cells (110) in the event of an abnormal event occurring in one battery cell (110). However, this is merely illustrative, and the cell pad (120) may be formed of a material with high thermal conductivity.

The cooling fin (130) may be formed of a material with high thermal conductivity. The cooling fin (130) may be disposed between the plurality of battery cells (110), and may exchange heat with adjacent battery cells (110) in contact. A body portion (133) of the cooling fin (130) may be in contact with the case of the battery cell (110) to exchange heat, and may exchange heat with the cooling fluid through bend portions (131, 132) provided at both ends of the body portion (133) (see FIG. 5).

The busbar (31) may be provided with two or more slits (32) into which the lead tabs (112) of the plurality of battery cells (110) are respectively inserted. The busbar (31) may electrically connect an electrode terminal (36) and the lead tab (112), which may be electrically connected to an external power source.

The support plate (33) supports a plurality of busbars (31), and a plurality of pass holes (35) through which the cooling fluid flows may be provided. The pass hole (35) may be provided in plural between the plurality of busbars (31) in a vertical direction (e.g., Z-axis in the drawings).

The cooling fluid introduced through the cooling port (50) may pass through the pass holes (35) to contact the cell assembly (100).

An insulating panel (38) including an electrically insulating material may be disposed between the busbar assembly (30) and the cell assembly (100). The insulating panel (38) may be provided with a first hole (not illustrated) communicating with the slit (32) of the busbar (31) such that the lead tab (112) may pass through the insulating panel (38) and be inserted into the slit (32). In addition, the insulating panel (38) may be provided with a second hole (not illustrated) communicating with the pass hole (35) of the support plate (33) such that the cooling fluid may pass through the busbar assembly (30).

As described above, the busbar assembly (30) of the present disclosure may be disposed on both sides of the cell assembly (100). In this case, the busbar assembly may include a first busbar assembly (30a) provided on one side of the cell assembly (100) and disposed to be close to the inlet port (50a), and a second busbar assembly (30b) provided on the other side of the cell assembly (100) and disposed to be close to the outlet port (50b).

In this case, the first and second busbar assemblies (30a, 30b) may be referred to for convenience, based on positions thereof relative to the cell assembly (100), and their detailed configurations may be identical.

When the first and second busbar assemblies (30a, 30b) are provided in this manner, the busbar assembly (30) may divide the accommodation space (S) into a plurality of spaces.

For example, the busbar assembly (30) may divide the accommodation space (S) into a first space (S1; inlet space) between the housing (20) and the first busbar assembly (30a), a second space (S2; loading space) between the first busbar assembly (30a) and the second busbar assembly (30b), and in which the cell assembly (100) is disposed, and a third space (S3; exhaust space) between the second busbar assembly (30b) and the housing (20).

In this case, "divide the accommodation space (S) into a plurality of spaces" does not mean physically separating one space from another space such that a fluid does not pass through, but rather may mean dividing the space based on a space in which a difference in fluid flow occurs between one space and another space.

Referring to FIG. 3, the first space (S1) may be a space into which the cooling fluid is introduced by the inlet port (50a; first cooling port). The second space (S2) may be a space into which the cooling fluid is introduced through at least one of the pass hole (35) of the first busbar assembly (30a) or a space between the first busbar assembly (30a) and the module housing (20), to contact the cell assembly (100) to exchange heat. The third space (S3) may be a space into which the cooling fluid is introduced through at least one of the pass hole (35) of the second busbar assembly (30b) or a space between the second busbar assembly (30b) and the module housing (20), and exhausted to the external space of the module housing (20) through the outlet port (50b; second cooling port).

Furthermore, based on flow of the cooling fluid, the first space (S1) may be located on an upstream side, and the third space (S3) may be located on a downstream side.

Since the cooling fluid primarily flows through the pass holes (35) between the first space (S1) and the second space (S2), and between the second space (S2) and the third space (S3), physical properties of the fluid, such as a flow rate or the like, may be changed rapidly.

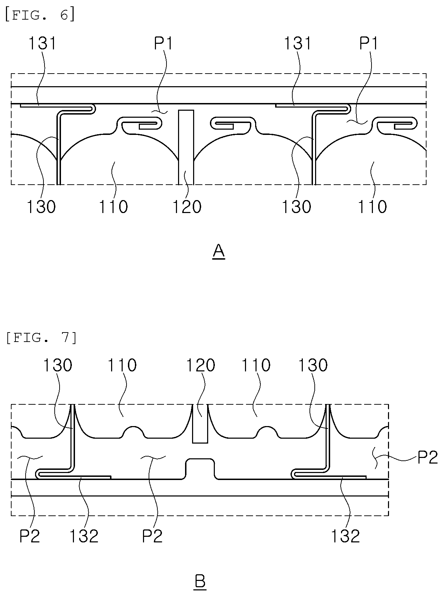

The second space (S2) may be a space in which the plurality of battery cells (110) are disposed, and may be a space in which heat exchange occurs between the cooling fluid and the plurality of battery cells (110). The cooling fluid introduced into the second space (S2) may flow on a downstream side toward the third space (S3) through a first flow path (P1), a space between the cell assembly (100) and the first cover (21), and a second flow path (P2), a space between the cell assembly (100) and the second cover (22). Details of the first and second flow paths (P2) will be described later in FIGS. 6 and 7.

Referring back to FIG. 3, the housing (20) may be provided with a port mounting portion (25) on which the cooling port (50) is mounted. The port mounting portion (25) may be provided on at least one of the first cover (21) or the second cover (22). The drawing illustrates that the port mounting portion (25) is formed on the first cover (21).

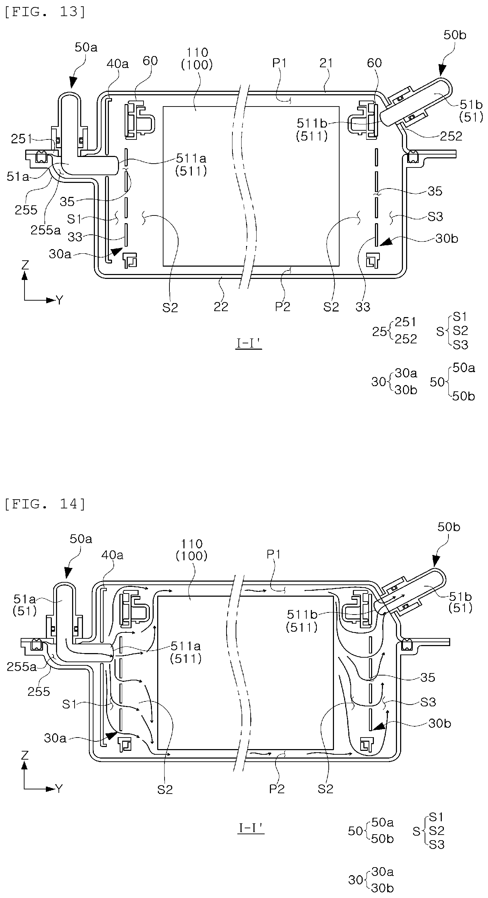

The port mounting portion (25) may include a first port mounting portion (251) on which the inlet port (50a) is seated or disposed, and a second port mounting portion (252) on which the outlet port (50b) is seated or disposed. The first port mounting portion (251) and the second port mounting portion (252) may include a first port hole (2511) and a second port hole (2521). The cooling fluid may be allowed to flow through each of the port mounting portions (251, 252). In another embodiment described below, the first port hole (2511) and the second port hole (2521) may be provided as holes through which a hose portion (51) is inserted into an internal space of the housing (20) (see FIG. 13).

For example, the first and second port holes (2511, 2521) may be provided with a shape penetrating through the first cover (21), and a penetration angle may be changed depending on a shape of the mounting portion (25). Referring to the drawing, the first port mounting portion

(251) may be disposed to face in the vertical direction (Z-axis direction), and the second port mounting portion (252) may be disposed at an angle. In this manner, the second port mounting portion (252) on which the outlet port (50b) is seated at an angle, the cooling fluid may be effectively exhausted from the accommodation space (S). An arrangement angle of the port mounting portion (25) is not limited to the configuration illustrated in the drawing.

In addition, as described above, the second port mounting portion (252) may be disposed at a higher position than the first port mounting portion (251). Since the cooling fluid rises from a lower portion to an upper portion of the accommodation space (S), when the second port mounting portion (252) disposed on a downstream side is disposed at a higher position, a flow distance of the cooling fluid may further increase to increase opportunity for contacting the cell assembly (100). That is, the second port hole (2522) may be disposed at a higher position than the first port hole (2511).

In addition, according to an embodiment of the present disclosure, at least one of the first port mounting portion (251) or the second port mounting portion (252) may be provided with a guide portion (255). The guide portion (255) may be formed as a groove in the housing (20) to form a guide space (255a). The guide portion (255) may be provided to guide at least one of the cooling fluid or the hose portion (51).

Referring to FIG. 3, the guide portion (255) may be disposed to face the first port mounting portion (251) or the inlet port (50a). Through this arrangement, as illustrated in FIG. 4, the cooling fluid supplied from a discharge end (511a) of the inlet port (50a) may be guided to flow toward the cell assembly (100).

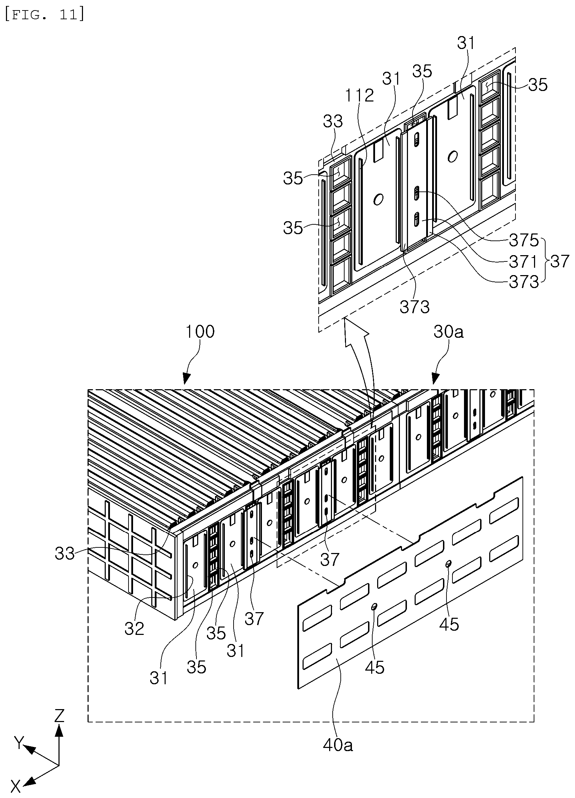

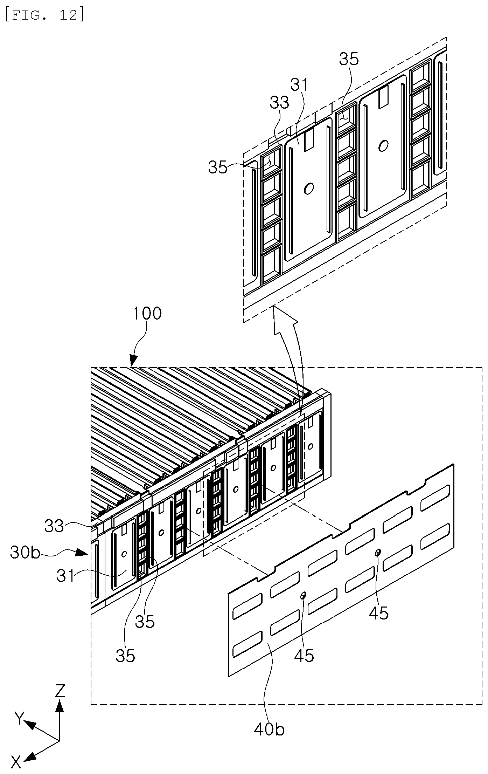

An end plate (40) may include a first end plate (40a) facing the first busbar assembly (30a), and a second end plate (40b) facing the second busbar assembly (30b). The first and second end plates (40a, 40b) may have the same main configuration, except for differences in arrangement positions. The first end plate (40a) and the second end plate (40b) may each have a plate hole (45) formed therein through which the cooling fluid may effectively flow (see FIGS. 11 and 12).

Referring again to FIG. 4, in an embodiment, the cooling fluid introduced through the discharge end (511a) of the inlet port (50a) may pass through the plate hole (45) of the first end plate (40a) and the pass hole (35) of the first busbar assembly (30a) to enter the second space (S2), to exchange heat with the cell assembly (100). In addition, the cooling fluid may pass through the pass hole (35) of the second busbar assembly (30b) and the plate hole (45) of the second end plate (40b) and be exhausted to the external space of the accommodation space (S) through the outlet port (50b).

Although both the first end plate (40a) and the second end plate (40b) are illustrated as being disposed in FIGS. 3 and 4, both may fall in the scope of the present disclosure even when only one is disposed or the end plate (40) is not necessarily disposed. Even when the end plate (40) is not present, an approximate flow direction (Y-axis direction) of the cooling fluid flowing in the first to third (S1 to S3) may not differ significantly.

FIG. 5 is a diagram illustrating a portion of a cross-section taken along line II-II' of FIG. 1, FIG. 6 is an enlarged view of portion A of FIG. 5, and FIG. 7 is an enlarged view of portion B of FIG. 6.

Referring to FIG. 5, a first flow path (P1), a separation space between a cell assembly (100) and a first cover (1), and a second flow path (P2), a separation space between the cell assembly (100) and a second cover (22), may be formed. As described above, a cooling fluid may flow through at least one of the first flow path (P1) or the second flow path (P2).

Furthermore, a cooling fin (130) may be in contact with the first cover (21) and the second cover (22) on both sides in the vertical direction, respectively. In this case, the first flow path (P1) and the second flow path (P2) may each be separated into a plurality of portions by the cooling fin (130). The cooling fin (130) may include a first end portion (131) and a second end portion (132), contacting the first cover (21) and the second cover (22), respectively.

The above-described structure may be an example, and the first end portion (131) and the second end portion (132) do not necessarily have to be in contact with a housing (20). For example, the first end portion (131) and the second end portion (132) may be spaced apart from the housing (20) or may be indirectly in contact with the housing (20) through a separate adhesive or the like.

Referring to FIG. 6, the first end portion (131) may be in contact with the first cover (21) to divide the first flow path (P1) into a plurality of spaces. In addition, the first end portion (131) may be bent to increase a contact area between the cooling fluid and the first cover (21). Referring to FIG. 7, the second end portion (132) may be in contact with the second cover (22) to divide the second flow path (P2) into a plurality of spaces. In addition, the second end portion (132) may be bent to increase a contact area between the cooling fluid and the second cover (22).

In this manner, the first flow path (P1) and the second flow path (P2) may be divided into a plurality of portions, respectively, to increase a contact area between the cooling fin (130) and the cooling fluid, thereby enhancing cooling efficiency.

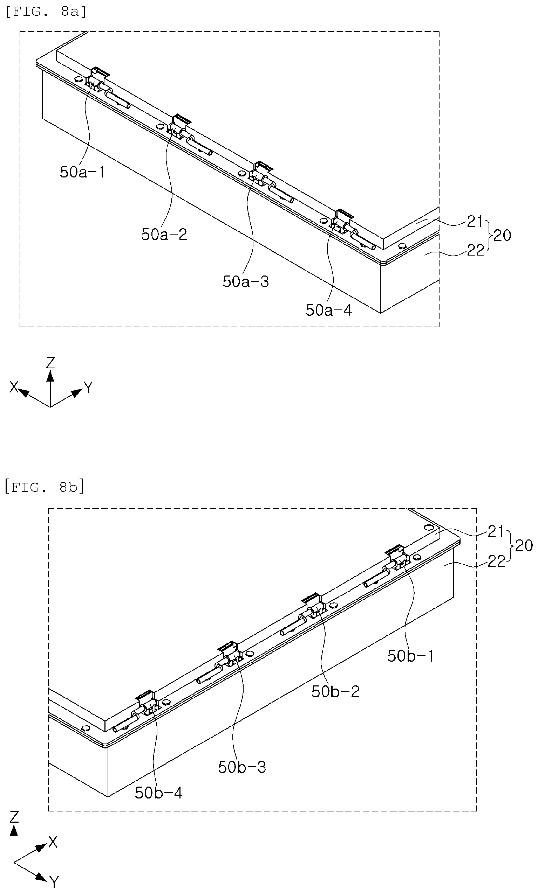

FIG. 8a is an enlarged view of the inlet port portion of FIG. 1, and FIG. 8b is an enlarged view of the outlet port portion of FIG. 1.

Referring to FIGS. 8a and 8b together, an inlet port (50a) and an outlet port (50b) of a cooling port (50) according to an embodiment may be provided in opposing pairs facing each other. In the drawings, a plurality of first inlet ports (50a) and a plurality of second outlet ports (50) are illustrated as being provided as plurality of pairs, respectively. In this case, "provided in pairs" may mean disposed to face each other such that a fluid flows approximately in the second direction.

In the drawings, it can be seen that a first inlet port (50a-1) and a first outlet port (50b-1), a second inlet port (50a-2) and a second outlet port (50b-2), a third inlet port (50a-3) and a third outlet port (50a-3), and a fourth inlet port (50a-4) and an outlet port (50b-4) may be provided in pairs corresponding thereto. The first ports (50a-1, 50b-1) to the fourth ports (50a-4, 50b-4) may be disposed at a predetermined gap in the first direction (X-axis direction).

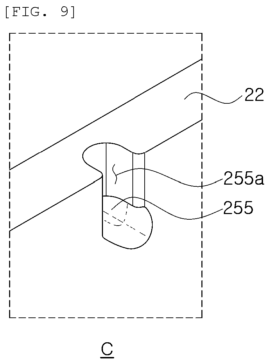

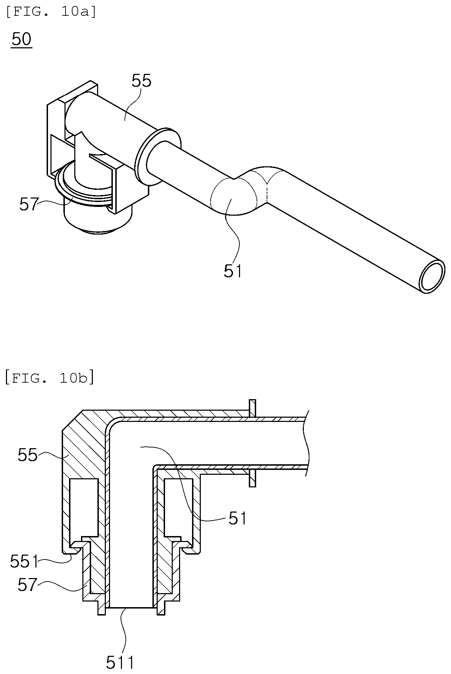

FIG. 9 is an enlarged view of portion C of FIG. 2, FIG. 10a is a perspective view of a cooling port according to an embodiment, and FIG. 10b is a cross-sectional view of the cooling port. Specific configurations of a cooling port (50) will be described with reference to FIGS. 9, 10a, and 10b.

Referring to FIG. 9, a guide portion (255) may be provided with a shape of which an inner wall of a housing (20) is recessed. Referring also to FIG. 3, a guide portion (255) may face a discharge end (511a) of an inlet port (50a) to guide a cooling fluid discharged from the discharge end (511a) in a direction of a battery cell (110). That is, the cooling fluid discharged from the discharge end (511a) may flow toward the battery cell (110) along a guide space (255a).

Since the inlet port (50a) and an outlet port (50b) may have the same configuration, but may be different from each other in view of a position relative to a flow direction of the cooling fluid, they will be described together. In addition, each component may be identical, except that an end (511) of the inlet port (50a) is referred to as a discharge end (511a), and an end (511) of the outlet port (50b) is referred to as an exhaust end (511b), based on a flow direction of a fluid.

A cooling port (50) may include a hose portion (51) through which the cooling fluid flows, a connector (55) connected to and supporting the hose portion (51), and a nipple (57) mounted on a port mounting portion (25) and connected to the connector (55).

The connector (55) may be provided with a hook portion (551) protruding toward the nipple (57), and may be detachably connected to the nipple (57). The nipple (57) may be provided on the port mounting portion (25), and may support the connector (55) at a predetermined position of a housing (20).

The hose portion (51) may be connected to the connector (55) in a state inserted into the connector (55). An end (511) of the hose portion (51) may be connected to the accommodation space (S), while the connector (55) and the nipple (57) are connected.

As described above, although an outer hose portion (512) is illustrated in the drawings that an end facing in an outward direction is disconnected, the outer hose portion (512) may be connected to a fluid circulation unit (not illustrated) circulating the cooling fluid. For example, the end of the outer hose portion (512) at the inlet port (50a) and the end of the outer hose portion (512) at the outlet port (50b) may be connected to the fluid circulation unit, respectively, such that the cooling fluid may circulate with each other. That is, through the fluid circulation unit, the cooling fluid may be discharged into the accommodation space (S) via the end (511) of the hose portion (51) of the inlet port (50a), i.e., the discharge end (511a).

FIG. 11 is a diagram illustrating a first busbar assembly (30a) disposed to be close to an inlet port (50a) according to an embodiment, and FIG. 12 is a diagram illustrating a second busbar assembly (30b) disposed to be close to an outlet port (50b) according to an embodiment.

Referring to FIG. 11, as described above, a pass hole (35) may be provided between a plurality of busbars (31) of a first busbar assembly (30a). The pass hole (35) may be formed by penetrating a support plate (33) in the second direction (Y-axis direction or flow direction of a cooling fluid).

In addition, a first end plate (40a) may be disposed to face the first busbar assembly (30a) in the second direction. As described above, the cooling fluid may flow through a plate hole (45).

According to another embodiment described below (see FIG. 13), a hose portion (51) may be inserted into the plate hole (45). In another embodiment, the plate hole (45) may be disposed to face an inlet port (50a) in the second direction (Y-axis direction), such that the hose portion (51) may be inserted directly into the plate hole (45) without being bent. This allows an end plate (40) to support the hose portion (51). In this case, an end (511) of the hose portion (51) may be disposed between the end plate (40) and the busbar assembly (30) to supply or discharge cooling fluid.

According to an embodiment, a fluid guide (37) may be disposed in the busbar assembly (30a) in a position facing the plate hole (45) of the first end plate (40a) in the second direction (Y-axis direction). The fluid guide (37) may be disposed in a position facing the plate hole (45).

Since the cooling fluid flows in through the plate hole (45) of the first end plate (40a), a flow velocity of the pass hole (35) facing the plate hole (45) among the plurality of pass holes (35) may increase more rapidly than that of other portions. Therefore, the present disclosure may appropriately control flow of the cooling fluid through the fluid guide (37).

When the fluid guide (37) is not present, the cooling fluid flowing into the first space (S1) may be intensively introduced through the pass hole (35) corresponding to a first hose portion (51a). The fluid guide (37) of the present disclosure may appropriately control this such that the cooling fluid flows evenly into the second space (S2) through the plurality of pass holes (35).

The fluid guide (37) may include a guide body (371) in which one or more guide holes (375) communicating with the pass hole (35) are formed, and an extension portion (373) extending from the guide body (371) toward an adjacent pass hole (35).

The guide hole (375) may have a smaller diameter than the pass hole (35), thereby appropriately reducing a flow rate of the cooling fluid. The guide body (371) may be provided in a concave shape to allow the cooling fluid to flow into the guide hole (375). The extension portion (373) may extend in a first direction to guide the cooling fluid toward another adjacent pass hole (35).

Referring to FIG. 12, similar to a first busbar assembly (30a), a pass hole (35) may be provided between a plurality of busbars (31) of a second busbar assembly (30b). The pass hole (35) may be formed by penetrating a support plate (33) in the second direction (Y-axis direction).

Furthermore, a second end plate (40b) may be disposed to face the second busbar assembly (30b) in the second direction.

According to another embodiment (see FIG. 13), a hose portion (51) of an outlet port (50b) may be inserted into a plate hole (45). In this alternative embodiment, the plate hole (45) may be formed in the second end plate (40b) in a position facing a second port mounting portion (252) in the second direction (Y-axis direction), thereby allowing the hose portion (521) of the outlet port (50b) to be inserted without bending and supporting the hose portion (51).

Shapes and sizes of the pass hole (35) of the first busbar assembly (30a) and the pass hole (35) of the second busbar assembly (30b) may be identical.

Hereinafter, a battery module according to another embodiment of the present disclosure will be described with reference to FIGS. 13 to 19.

Other embodiments will be described primarily with respect to modified portions, as compared to the above-described embodiment, and any overlapping details will be omitted.

According to another embodiment, a hose portion (51) of at least one of an inlet port (50a) or an outlet port (50b) may be provided in a bendable manner, thereby allowing a flow direction of a cooling fluid to be changed.

That is, according to another embodiment of the present disclosure, the flow direction of the cooling fluid flowing in an accommodation space (S) may be changed by changing an orientation angle of an end (511) of at least one of the inlet port (50a) or the outlet port (50b).

Hereinafter, another embodiment of the present disclosure will be described with reference to FIGS. 13 to 19. However, for ease of understanding, the description of the other embodiments will focus on the modified portions, excluding any overlapping portions from the previous embodiment.

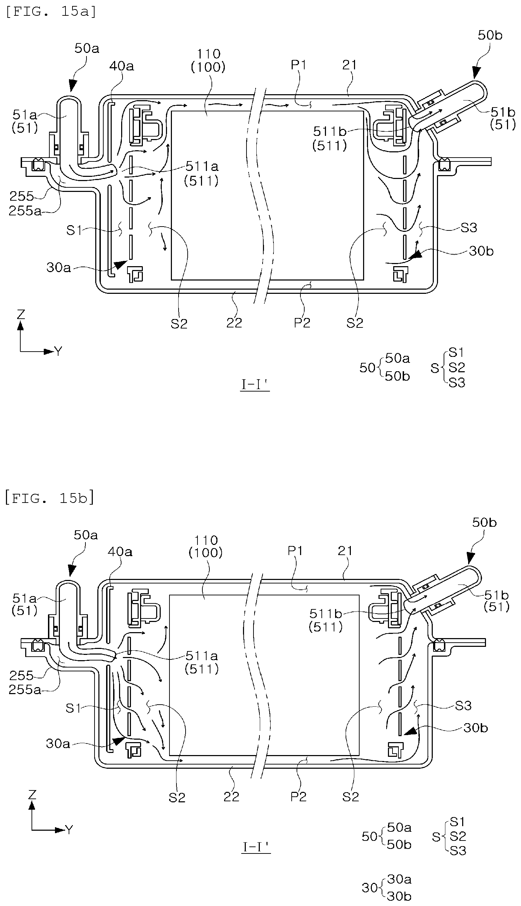

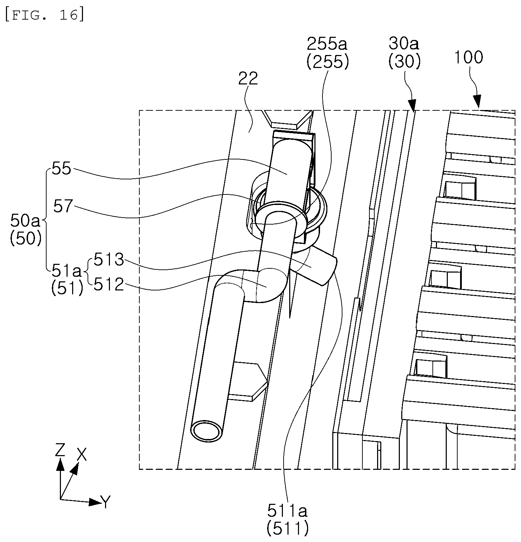

FIG. 13 is a cross-sectional view of a battery module according to another embodiment, FIG. 14 is a diagram schematically illustrating a flow direction of the cooling fluid in in FIG. 33, FIG. 15a is a diagram schematically illustrating a flow direction of the cooling fluid when the inlet port faces upward in FIG. 13, FIG. 15b is a diagram schematically illustrating a flow direction of the cooling fluid when the inlet port faces downward in FIG. 3, and FIG. 16 is a diagram illustrating an example in which an inlet port is guided by a guide in another embodiment.

Referring to FIGS. 13 to 15 together, according to another embodiment, at least one of a hose portion (51a) of an inlet port (50a) or a hose portion (51b) of an outlet port (50b) may extend in a housing (20) such that an end (511) may be disposed in an accommodation space (S). That is, at least a portion of a cooling port (50) may be disposed in the accommodation space (S). Although FIGS. 13 to 15 illustrate that a second end plate (40b) is removed, it should be understood that the second end plate (40b) may be disposed as in FIGS. 3 and 4.

In this case, at least one of the first hose portion (51a) or the second hose portion (51b) may be configured to change an angle facing a cell assembly (100) in the accommodation space (S) (see FIGS. 15a and 15b), thereby changing a flow direction of a cooling fluid.

According to another embodiment, a first port hole (2511) of a first port mounting portion (251) may be provided such that the first hose portion (51a) is inserted, and a second port hole (2521) of a second port mounting portion (252) may be provided such that the second hose portion (51b) is inserted.

Furthermore, referring to FIGS. 13 and 16 together, in another embodiment, a guide portion (255) may function to bend an entry angle of the hose portion (51) such that an end (511) of the hose portion (51) points toward the cell assembly (100).

For example, the guide portion (255) may be formed as a groove at a portion facing the first mounting portion (251) to form a guide space (255a). Through this, an orientation angle of the distal end (511) of the hose portion (51) may be roughly changed by the guide portion (255).

For example, in the drawings, the guide portion (255) may guide the first hose portion (51) such that a discharge end (511a) of the first hose portion (51) faces the cell assembly (100).

That is, the hose portion (51) of the first port (50) may be inserted into the accommodation space (S) through the first port hole (2511), and the end (511) may be bent by the guide space (255a) formed by the guide portion (255) to face the cell assembly (100). In this manner, the guide portion (255) may support the hose portion (51) such that the cooling fluid may flow in an appropriate direction.

Referring to FIG. 16, the hose portion (51) of the cooling port (50) may include an outer hose portion (512) disposed outside the housing (20) and an inner hose portion (513) disposed inside the housing and disposed in the accommodation space (S). The inner hose portion (513) may pass through a plate hole (45) of an end plate (40).

Furthermore, according to the other embodiment, the hose portion (51) may be configured to be inserted into at least one of a plate hole (45) of the first end plate (40a) or a plate hole (45) of the second end plate (40b). Since this has been described above, a detailed description thereof will be omitted. Hereinafter, a change in flow direction of a cooling fluid will be described with reference to FIGS. 14, 15a, and 15b.

FIG. 14 illustrates that the first hose portion (51a) is bent by the guide portion (255) such that the discharge end (511a) points the cell assembly (100) in the second direction (e.g., Y-axis direction). First, referring to FIG. 14, the cooling fluid may flow from a first space (S1) provided with the inlet port (50a), through a second space (S2), and into a third space (S3) provided with the outlet port (50b), and be exhausted to an external space of the module housing (20). That is, unlike the above embodiment (see FIG. 3), the discharge end (511a) may be disposed to face a first busbar assembly (30a).

In this case, the cooling fluid discharged into the first space (S1) through the discharge end (511a) may flow into the second space (S2) through a pass hole (35) of the first busbar assembly (30a). Furthermore, the cooling fluid introduced into the second space (S2) may be distributed and flow through a first flow path (P1) and a second flow path (P2). Thereafter, the cooling fluid may pass through a pass hole (35) of a second busbar assembly (30b) and be exhausted to the external space of the housing (20) along the second hose portion (51b).

FIGS. 15a and 15b illustrate that an orientation angle of the end (511) of the first hose portion (51a), i.e., the discharge end (511a), is changed.

Referring to FIG. 15a, the first hose portion (51a) may be bent such that the discharge end (511a) points upward or toward the first flow path (P1). In this case, the cooling fluid may intensively pass through the first flow path (P1). In other words, a flow rate of the cooling fluid passing through the first flow path (P1) may increase, as compared to the second flow path (P2).

Referring to FIG. 15b, the first hose portion (51a) may be bent such that the discharge end (511a) points downward or toward the second flow path (P2). In this case, the cooling fluid may intensively pass through the second flow path (P2). In other words, a flow rate of the cooling fluid passing through the second flow path (P2) may increase, as compared to the first flow path (P1).

In this manner, the present disclosure may control the flow rate of the cooling fluid passing through the first flow path (P1) and the second flow path (P2) by changing a flow direction of the cooling fluid flowing in the accommodation space (S).

Although FIGS. 14 and 15 illustrate that the first hose portion (51a) is bent as described above, the present disclosure is not limited thereto. Specifically, although the drawings illustrate that the second hose portion (51b) is disposed diagonally such that the end (511) of the second hose portion (51b), i.e., an exhaust end (511b), is directed toward the cell assembly (100), the present disclosure is not limited thereto. For example, the second hose portion (51b) of the outlet port (50b) may also be bent, similar to the first hose portion (51a), to change an orientation angle of the exhaust end (511b).

That is, the present disclosure should be understood to include any device that may be configured to change an orientation angle of the end (511; 511a, 511b) disposed in the accommodation space (S) by bending the hose portion (51; 51a, 51b).

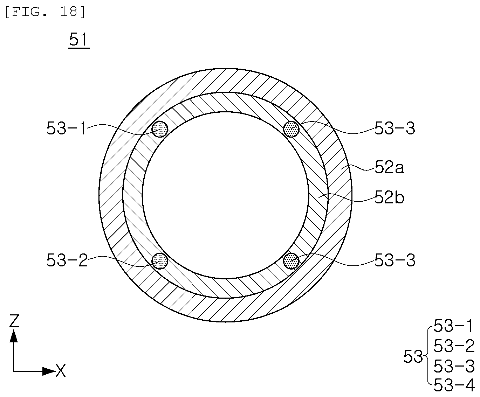

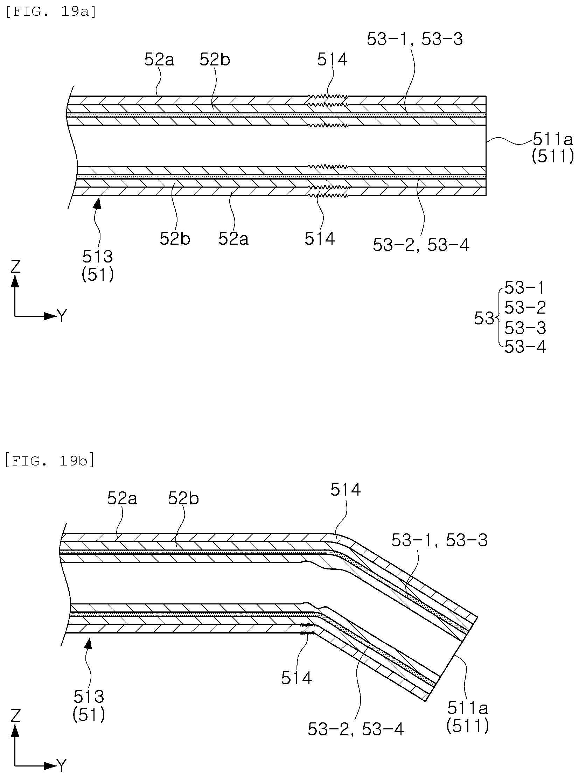

A structure for changing the orientation angle of the discharge end (511a) and the exhaust end (511b) may be described in more detail later in FIGS. 18, 19a, and 19b.

"Changing the orientation angle of the discharge end (511a) and the exhaust end (511b)" or "changing the flow direction of the cooling fluid" here may mean changing a flow rate of a fluid passing through any one of the plurality of flow paths (P1, P2). For example, it may mean increasing a flow rate of the cooling fluid passing through the first flow path (P1) as in FIG. 5a, or increasing a flow rate of the cooling fluid passing through the second flow path (P2) as in FIG. 5b). That is, it is not limited to allowing the cooling fluid to flow only through any one of the plurality of flow paths (P1, P2).

In addition, although FIGS. 14 and 15 describe that the hose portion (51) may be bent around an axis parallel to the first direction (X-axis direction), it may also be bent around an axis parallel to the third direction (Z-axis direction).

For example, referring again to FIGS. 8a and 8b described above, the second inlet port (50a-2) may not only discharge fluid toward the second outlet port (50b-2) in an opposing direction in pairs, but may also rotate around an axis, parallel to the third direction, to discharge fluid toward the first or third outlet ports (50b-1, 50b-3). In other words, any method that may change a discharge angle of the cooling fluid in any direction and thereby change a flow direction of the cooling fluid in the accommodation space (S) may be in the scope of the present disclosure.

Flow of the cooling fluid in the accommodation space (S) may be changed significantly depending on an orientation angle of the first hose portion (51a) through which the cooling fluid is discharged. In other words, there may be a significant difference in flow of the cooling fluid when the second hose portion (51b) is fixed and an angle of the first hose portion (51a) is changed, as compared to when the first hose portion (51a) is fixed and an angle of the second hose portion (51b) is changed. This may be because the cooling fluid may be discharged through the end (511a; discharge end) of the first hose portion (51a), so a hydraulic pressure of the cooling fluid may be greater at the end (511a) of the first hose portion (51a) than at the end (511b; exhaust end) of the second hose portion (51b).

Also, as described above, although the end of the hose portion (51) of the cooling port (50) disposed outside the housing (20) may be depicted as being disconnected in the drawings, this is merely illustrative, and may be connected to other configurations. For example, the outer end of the hose portion (51) may be connected to a fluid circulation unit (not illustrated) described below, allowing cooling fluid to circulate.

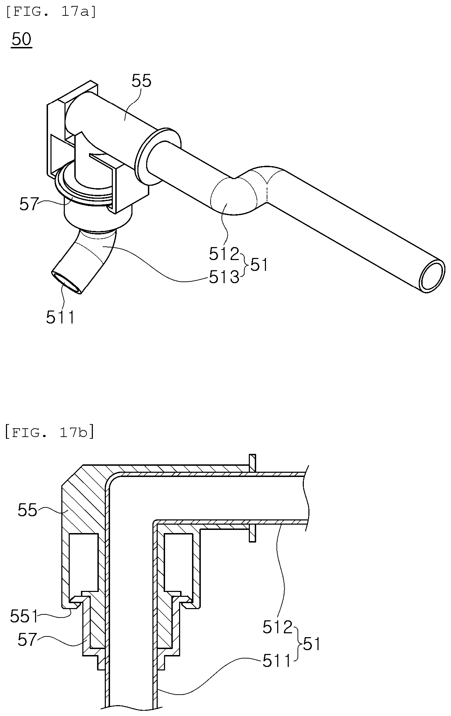

Hereinafter, a structure of a cooling port (50) according to another embodiment will be described with reference to FIGS. 17 to 19.

FIG. 17a is a perspective view of a cooling port according to another embodiment, and FIG. 17b is a cross-sectional view of the cooling port. Any details overlapping the cooling port according to the embodiment described above in FIGS. 10a and 10b will be omitted.

According to another embodiment, a hose portion (51) may extend to one side of a connector (55) such that an end of the hose portion (51) may be disposed in an accommodation space (S). The hose portion (51) may be inserted into a housing (20) through a nipple (57).

In another embodiment, the hose portion (51) may include an outer hose portion (512) disposed outside the housing (20), and an inner hose portion (513) disposed inside the housing (20), and an end (511) may be provided on the inner hose portion (513).

That is, in the structure described above with reference to FIGS. 10a and 10b, the hose portion (51) may extend further toward the internal space of the housing (20).

Hereinafter, with reference to FIGS. 18 and 19, a structure in which a hose portion (51) is bent to change an orientation angle thereof will be described.

FIG. 18 is a cross-sectional view of a hose portion of a cooling port according to another embodiment, and FIGS. 19a and 19b are example drawings illustrating changes in angle of a hose according to another embodiment. The descriptions of FIGS. 18 and 19 may be commonly applied to a first hose portion (511a) and a second hose portion (511b), but for ease of understanding, the description will be based on the first hose portion (511a).

Referring to FIG. 18, in another embodiment, a cross-section of a hose portion (51) may be provided as a plurality of layers. Specifically, the hose portion (51) may include an outer layer (52a) disposed in an outermost portion, an inner layer (52b) disposed on an inner side thereof to face a cooling fluid to be flowed, and a plurality of control wires (53) that bend the hose portion (51).

The outer layer (52a) may include an electrically insulating material, and may be configured to externally surround the inner layer (52b) and a control wire (53). The inner layer (52b) may be made of a stable material that does not react with the cooling fluid.

The control wire (53) may be provided on an inner side of the outer layer (52a). The control wire (53) may be disposed between the outer layer (52a) and the inner layer (52b), or on an inner side of the inner layer (52b).

Furthermore, the control wire (53) may be disposed to be inserted into the outer layer (52a) or the inner layer (52b). Although the drawings illustrates that the control wire (53) is inserted into the inner layer (52b), arrangement of the control wire (53) in the present disclosure is not limited thereto.

For example, in an embodiment, the control wire (53) may be a piezoelectric wire of which length is changed depending on current to be applied. The piezoelectric wire may be a wire including an element of which length increases or decreases depending on current to be applied, and the length may be changed depending on a magnitude of the current supplied from the fluid circulation unit. However, the control wire (53) of the present disclosure is not limited thereto.

According to an embodiment, the control wire (53) may be provided with a plurality of control wires, for example, four control wires (53-1, 53-2, 53-3, 53-4).

Referring to FIGS. 18, 19a, and 19b together, for example, when lengths of first and third control wires (53-1, 53-3) increase and lengths of second and fourth control wires (53-2, 53-4) decrease, the hose portion (51) may be bent upward (upward in the Z-axis direction), and conversely, when the lengths are changed, it may be bent downward (downward in the Z-axis direction).

In addition, when the lengths of the first and second control wires (53-1, 53-2) increase and the lengths of the second and fourth control wires (53-3, 53-4) decrease, the hose portion (51) may be bent to one side (one side in the X-axis direction), and conversely, when the lengths are changed, it may be bent to the other side (the other side in the X-axis direction).

The hose portion (51) of FIG. 19a may correspond to a state of the first hose portion (51a) of FIG. 14, and the hose portion (51) of FIG. 19b may correspond to a state of the first hose portion (51a) of FIG. 15b.

Through this structure, the hose portion (51) may change an angle at which the end (511) faces.

The hose portion (51) may be provided with a bend portion (514), and may be bent around the bend portion (514). The bend portion (514) is not particularly limited as long as it allows the hose portion (51) to bend, and may be specifically disposed in the inner hose portion (513).

To easily adjust the direction of the end (511), an even number of control wires (53) may be provided.

According to another embodiment of the present disclosure, a fluid distributer (39) may be disposed between a busbar assembly (30) and a cell assembly (100). The fluid distributer (39) will be described below.

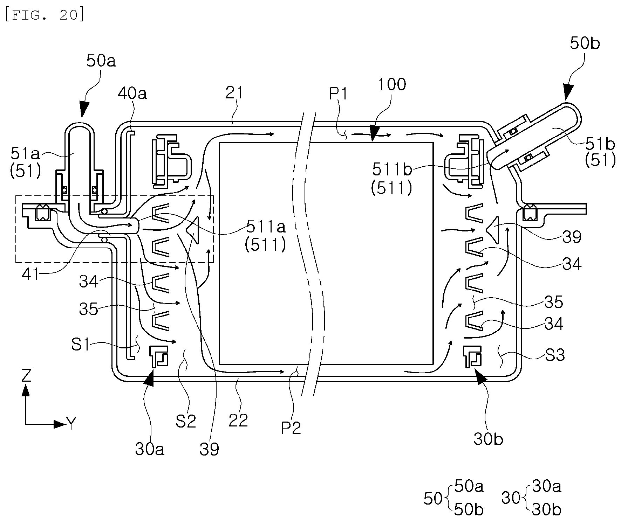

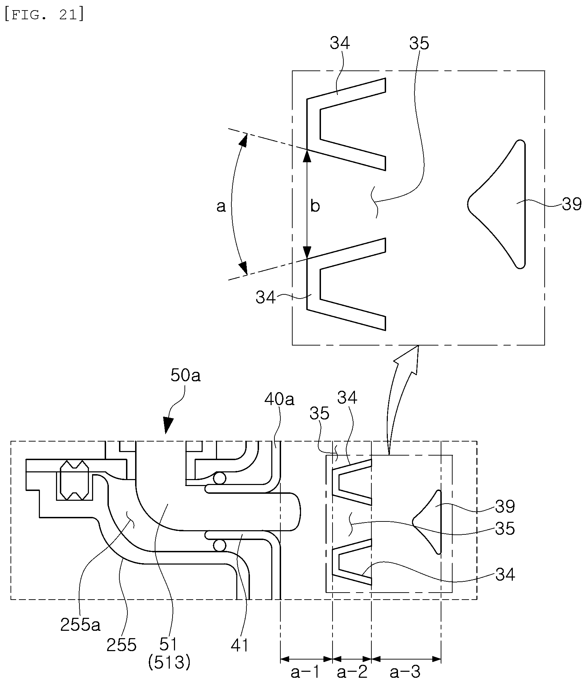

FIG. 20 is a cross-sectional view of a battery module provided with a fluid distributer according to another embodiment, and FIG. 21 is a partially enlarged view of the fluid distributer (39) of FIG. 20.

Referring to FIG. 20, a fluid distributer (39) may be configured such that an area facing a cooling fluid increases from an upstream side to a downstream side, based on a flow direction of the cooling fluid. The fluid distributer (39) may be disposed between a pass hole (35) and a cell assembly (100) in a busbar assembly (30) or an insulation panel (38).

Although the present disclosure illustrates in a state in which a second end plate (40b) is removed, the present disclosure is not limited thereto, and the fluid distributer (39) may be disposed even when the second end plate (40b) is added.

The fluid distributer (39) is illustrated as being disposed both between a first busbar assembly (30a) and the cell assembly (100) and between a second busbar assembly (30b) and the cell assembly (100), but may be disposed in at least one of the two. The cooling fluid may be distributed toward a first flow path (P1) and a second flow path (P2) while passing through the fluid distributer (39). In addition, turbulent flow may occur behind (downstream side of) the fluid distributer (39), to increase cooling efficiency with respect to the cell assembly (100).

A pass hole guide (34) protruding toward the upstream side may be provided between pass holes (35). The pass hole guide (34) may be formed by protruding a portion of a support plate (33) adjacent to the pass hole (35). The pass hole guide (34) may be provided with a shape like "[" such that an area facing the cooling fluid increases from the upstream side to the downstream side based on the flow direction of the cooling fluid. The pass hole guide (34) may allow the cooling fluid to flow into the pass hole (35). The pass hole guide (34) may be formed not only on the support plate (33) of a first busbar assembly (30a) but also on a second busbar assembly (33b).

In the drawings, a first end plate (40a) may be provided with a protrusion (41) extending upstream with respect to the flow direction of the cooling fluid and having at least a portion inserted into a guide space (255a), and a plate hole (45) of the first end plate (40a) may be formed in the protrusion (41). In this manner, at least a portion of the first end plate (40a) may be inserted or disposed into the guide space (255a), to support more stably a first hose portion (51a).

Referring to FIG. 21, the flow rate of the cooling fluid introduced into a first space (S1) by the fluid distributer (39) may change. A first flow section (a-1) may be a section in which a discharge end (511a) of an inlet port (50a) is disposed and a discharged cooling fluid flows, a second flow section (a-2) may be a section in which the cooling fluid passes through the pass hole (35), and a third flow section (a-3) may be a section in which the fluid distributer (39) is disposed and the cooling fluid is distributed.

The first flow section (a-1) may be a space in which the cooling fluid discharged through the first hose portion (51a) may be discharged. The first flow section (a-1) may be a space in which the cooling fluid first enters. An end (511) of the first hose portion (51a), i.e., a discharge end (511a), may have an inner hose portion

(513) bent such that a flow direction is changed in the first section (a-1). In this case, a flow rate of the cooling fluid in the first flow section (a-1) may be lower than a flow rate of the cooling fluid in the second flow section (a-2), due to the pass hole (35) and the pass hole guide (34).

In the second flow section (a-2), a flow rate of the cooling fluid may increase, as the cooling fluid passes through the pass hole guide (34) and the pass hole (35). In this case, the flow rate of the cooling fluid in the second flow section (a-2) may be changed depending on a guide angle (a) formed between adjacent pass hole guides (34) and a guide width (b) of the end. For example, as the guide angle (a) and the guide width (b) decrease, a flow rate of the cooling fluid passing through the pass hole (35) may relatively increase. Conversely, as values thereof increase, a flow rate of the cooling fluid passing through the pass hole (35) may relatively decrease.

In the third flow section (a-3), at least a portion of the cooling fluid may be in contact with the fluid distributer (39) to disperse the flow direction. This allows the cooling fluid to be more widely dispersed and flow in the third flow section (a-3).

Although FIG. 21 illustrates that the first busbar assembly (30a) is disposed upstream of the flow direction of the cooling fluid, the pass hole guide (34) and the fluid distributer (39) of the second busbar assembly (30b) disposed downstream may also perform the same function.

In this manner, considering various conditions such as the number of battery cells (110), the number of cooling ports (50), or the like, the guide angle (a) and the guide width (b) may be adjusted to appropriately control a flow rate of the cooling fluid entering the second space (S2) from the first space (S1) or entering the third space (S3) from the second space (S2).

While various embodiments of the present disclosure have been described in detail above, the scope of the present disclosure is not limited thereto, and it will be apparent to those skilled in the art that various modifications and variations are possible without departing from the technical spirit of the present disclosure as defined in the claims. Some components of the above-described embodiments may be omitted, and the embodiments may be combined with each other.

The above-described embodiments may be merely examples of application of the principles of the present disclosure, and other configurations may be further incorporated without departing from the scope of the present disclosure.

## Claims

1. A battery module comprising:
a housing provided with an accommodation space;
a cell assembly accommodated in the accommodation space and including a plurality of battery cells;
a first cooling port of which at least a portion is disposed in the housing to face one side of the cell assembly, and supplying cooling fluid to the accommodation space; and
a second cooling port of which at least a portion is disposed in the housing to face the other side of the cell assembly, and exhausting the cooling fluid supplied to the accommodation space to an external space of the housing,
wherein the first cooling port and the second cooling port are disposed to have different heights.

2. The battery module of claim 1, wherein the second cooling port is disposed at a higher position than the first cooling port.

3. The battery module of claim 1, wherein the first cooling port includes a discharge end through which the cooling fluid is discharged, and the second cooling port includes an exhaust end through which the cooling fluid from the accommodation space is introduced, and
wherein the exhaust end is disposed on a higher level than the discharge end.

4. The battery module of claim 1, wherein the plurality of battery cells are stacked in the accommodation space in a first direction, and
wherein the first cooling port and the second cooling port are disposed to face each other in a second direction, perpendicular to the first direction.

5. The battery module of claim 4, wherein the first cooling port and the second cooling port are provided as a plurality of first cooling ports and a plurality of second cooling ports, respectively, and
wherein each of the plurality of first cooling ports and each of the plurality of second cooling ports are provided in opposing pairs facing each other in the second direction.

6. The battery module of claim 4, further including a guide portion provided in the housing to guide the cooling fluid supplied from the first cooling port in the second direction.

7. The battery module of claim 6, wherein the guide portion is disposed on a lower level than the first cooling port, and at least a portion of the guide portion is disposed to face the first cooling port.

8. The battery module of claim 1, further including a first busbar assembly and a second busbar assembly, respectively disposed on one side and the other side of the cell assembly in the accommodation space, and each of the first busbar assembly and the second busbar assembly including a plurality of pass holes through which the cooling fluid passes, and
wherein the accommodation space includes:
a first space between the housing and the first busbar assembly;
a second space in which the cell assembly is disposed, and between the first busbar assembly and the second busbar assembly; and
a third space between the second busbar assembly and the housing.

9. The battery module of claim 8, wherein the housing includes a first cover disposed above the cell assembly, and a second cover disposed below the cell assembly and facing the first cover with the cell assembly interposed therebetween, and
wherein the second space includes a first flow path formed as a separation space between the cell assembly and the first cover, and a second flow path formed as a separation space between the cell assembly and the second cover.

10. The battery module of claim 9, wherein the cell assembly includes a plurality of cooling fins disposed between the plurality of battery cells, and
wherein the plurality of cooling fins include:
a body portion facing the plurality of battery cells;
a first extension portion extending from the body portion to one side and disposed in the first flow path; and
a second extension portion extending from the body portion to the other side and disposed in the second flow path.

11. The battery module of claim 9, wherein the cell assembly includes a plurality of cooling fins disposed between the plurality of battery cells, and
wherein the plurality of cooling fins extend to contact at least one of the first cover or the second cover, to divide at least one of the first flow path or the second flow path into a plurality of flow paths.

12. The battery module of claim 8, wherein each of the first busbar assembly and the second busbar assembly include a plurality of busbars electrically connected to the plurality of battery cells, and
wherein the plurality of pass holes are disposed between the plurality of busbars in a first direction in which the plurality of battery cells are stacked.

13. The battery module of claim 8, wherein the first busbar assembly is provided with a fluid guide that guides the flow of the cooling fluid supplied from the first cooling port, and
wherein the fluid guide includes:
a guide body having at least one guide hole formed in communication with the plurality of pass holes; and
an extension portion extending from the guide body in a first direction in which the battery cells are stacked.

14. The battery module of claim 8, wherein the first busbar assembly further includes a plurality of pass hole guides disposed between the plurality of pass holes and protruding in a direction toward the first cooling port, and
wherein the plurality of pass hole guides are provided with a shape such that a gap between adjacent pass holes, among the plurality of pass holes, gradually decreases in a direction from an upstream side to a downstream side, based on a flow direction of the cooling fluid.

15. The battery module of claim 8, wherein a fluid distributer distributing flow of the cooling fluid is disposed between the plurality of pass holes and the cell assembly, and
wherein the fluid distributer is provided with a shape such that a width facing the cooling fluid increases in a direction from an upstream side to a downstream side, based on a flow direction of the cooling fluid in the accommodation space.

16. The battery module of claim 1, wherein the first cooling port includes a first hose portion of which at least a portion is disposed in the accommodation space and through which a fluid supplied to the accommodation space flows,
the second cooling port includes a second hose portion of which at least a portion is disposed in the accommodation space and through which the cooling fluid exhausted to the external space of the housing flows, and
at least one of the first hose portion or the second hose portion is provided to be bendable in the accommodation space.

17. The battery module of claim 16, wherein the first hose portion is provided with a discharge end through which the cooling fluid is discharged on an end disposed in the accommodation space, and the second hose portion is provided with an exhaust end through which the cooling fluid of the accommodation space is introduced on an end disposed in the accommodation space, and
at least one of the first hose portion or the second hose portion is bendable in a predetermined direction such that a direction in which the discharge end or the exhaust end faces is changed.

18. A battery module comprising:
a housing provided with an accommodation space;
a cell assembly disposed in the accommodation space and including a plurality of battery cells;
a first cooling port provided in the housing to supply a cooling fluid to the accommodation space; and
a second cooling port provided in the housing to exhaust the cooling fluid from the accommodation space to an external space of the housing,
wherein the housing includes a first port mounting portion and a second port mounting portion, on which the first cooling port and the second cooling port are respectively mounted, and
wherein the first port mounting portion and the second port mounting portion are disposed on different heights.

19. A battery module comprising:
a cell assembly including a plurality of battery cells;
a housing provided with an accommodation space in which the cell assembly is disposed, and including a first cover and a second cover, coupled to face each other, with the cell assembly interposed therebetween; and
a first cooling port in which a discharge end discharging a cooling fluid is disposed in the accommodation space to discharge the cooling fluid into the accommodation space,
wherein the accommodation space includes a first flow path and a second flow path, through which the cooling fluid flows between the cell assembly and the first cover, and
wherein the first cooling port changes a facing direction of the discharge end, to change a flow rate of the cooling fluid flowing through the first flow path and the second flow path.

20. The battery module of claim 19, wherein in the discharge end, the facing direction of the discharge end is changed to face at least one of the first flow path, the second flow path, or the cell assembly.
